# EUROPÄISCHE PATENTSCHRIFT

(11) **EP 3 084 191 B1**
(45) Veröffentlichungstag und Bekanntmachung des Hinweises auf die Patenterteilung: **21.08.2019**
(21) Anmeldenummer: 14796474.6
(22) Anmeldetag: 06.11.2014
(51) Int. Cl.: F02D 41/14, F02D 41/22, F02D 41/20, F02D 41/28

(54) **VERFAHREN ZUR STEUERUNG EINER ENDSTUFE EINES ELEKTRISCHEN VERBRAUCHERS EINES KRAFTFAHRZEUGS**
METHOD FOR CONTROLLING AN OUTPUT STAGE OF AN ELECTRICAL CONSUMER IN A MOTOR VEHICLE
PROCÉDÉ DE COMMANDE DE L'ÉTAGE DE SORTIE D'UN CONSOMMATEUR ÉLECTRIQUE DE VÉHICULE À MOTEUR

(30) Priorität: 18.12.2013 DE 102013226439
(43) Veröffentlichungstag der Anmeldung: 26.10.2016
(73) Patentinhaber: Robert Bosch GmbH, 70442 Stuttgart (DE)
(72) Erfinder: FEY, Michael, 75446 Wiernsheim (DE)
(86) Internationale Anmeldenummer: PCT/EP2014/073888
(87) Internationale Veröffentlichungsnummer: WO 2015/090717

(56) Entgegenhaltungen:
- DE-A1-102009 000 138
- US-A- 5 919 346
- US-A- 6 094 975
- US-A1- 2006 018 636

## Beschreibung

Die vorliegende Erfindung betrifft ein Verfahren zur Steuerung einer Heizerendstufe eines Heizelements einer Lambdasonde eines Kraftfahrzeugs.

### Stand der Technik

Zur Erfassung einer Sauerstoffkonzentration im Abgas werden in heutigen Motorsteuerungssystemen Lambdasonden eingesetzt. Eine Lambdasonde beruht auf einer galvanischen Sauerstoffkonzentrationszelle mit einem Festkörperelektrolyt. Der Festkörperelektrolyt wird typischerweise bei einer Aktivierungstemperatur von ca. 350°C für Sauerstoffionen leitend. Eine Nominaltemperatur der Lambdasonde liegt in der Regel deutlich höher: typischerweise zwischen 650°C und 850°C. Aus diesem Grund wird die Lambdasonde in der Regel aktiv elektrisch beheizt. Die Lambdasonde besitzt zu diesem Zweck ein elektrisches Heizelement, das von einem Steuergerät angesteuert wird. Der Heizer ist so ausgelegt, dass er unter normalen Bedingungen eine große Heizleistungsreserve aufweist, das heißt, dass eine notwendige Heizerspannung deutlich kleiner als eine verfügbare Versorgungsspannung ist. Üblicherweise wird die Lambdasonde nicht mit einer Gleichspannung, sondern über eine Heizerendstufe mit einer getakteten Effektivspannung betrieben, die durch Pulsweitenmodulation der Versorgungsspannung erzeugt wird.

Wenn eine Heizerendstufe die Versorgungsspannung zu lange ununterbochen auf ein Heizelement der Lambdasonde schaltet, wird die Lambdasonde durch Überhitzung beschädigt. Dazu kann es durch eine fehlerhafte Software kommen, die zu einer Ansteuerung der Heizerendstufe verwendet wird. Als Fehler in der Software sind funktionale Designfehler, Fehler bei einer Integration eines Softwaremoduls in einer Gesamtsoftware des Steuergeräts und Fehler bei einer Applikation der Software zu verstehen. Manche Fehlerquellen werden bereits durch entsprechende Überwachungsfunktionalitäten der Software selbst abgefangen.

Dies ist zum Beispiel mittels einer Funktion der Software möglich, wobei die wenigstens eine Funktion wenigstens zwei Tasks umfasst und wobei jede der wenigstens zwei Tasks wenigstens einen Prozess umfasst. Hierbei erfolgt bei einem Aufruf eines Prozesses oder einer Task eine Bestätigung mittels eines Quittierungsbits und ein Status des bzw. der Quittierungsbits wird überwacht, um einen fehlenden oder zeitlich inkorrekten Aufruf des jeweiligen Prozesses oder der jeweiligen Task zu erkennen. Es bleibt jedoch ein Restrisiko bestehen, dass die Lambdasonde durch einen entsprechenden Fehler der Software beschädigt wird.

In US 6 094 975 A wird erkannt, dass die Heizerendstufe eine Versorgungsspannung länger ununterbrochen auf das Heizelement der Lambdasonde schaltet, als eine vorgegebene Zeitschwelle.

Die Heizerendstufe selbst kommt bei einer derartigen fehlerhaften Ansteuerung üblicherweise nicht in einen kritischen Bereich, in dem Selbstschutzmaßnahmen der Heizerendstufe wie zum Beispiel eine Strombegrenzung und/oder ein Abschalten greifen. Deshalb kann durch die Selbstschutzmaßnahmen eine Beschädigung der Lambdasonde nicht verhindert werden.

### Offenbarung der Erfindung

In dem erfindungsgemäßen Verfahren wird eine Heizerendstufe eines Heizelements einer Lambdasonde eines Kraftfahrzeugs gesteuert. Direkt innerhalb einer Hardware der Heizerendstufe des Heizelements wird überwacht, ob die Heizerendstufe eine Versorgungsspannung länger als eine vorgegebene Zeitschwelle ununterbrochen auf das Heizelement der Lambdasonde schaltet. Somit wird das Heizelement besser gegen Beschädigung durch Überhitzung infolge eines Fehlers einer Software geschützt. Eine Einschaltdauer des Heizelements wird von der Hardware der Endstufe am Ende einer Ansteuerkette überwacht. Fehler, die weiter vorne in der Ansteuerkette auftreten, wie Fehler der Software, werden erkannt und Gegenmaßnahmen werden ergriffen, um eine Beschädigung des Heizelements zu verhindern. Im Weiteren werden Kosten für zusätzliche Bauteile und deren Montage eingespart, sowie zusätzliche Fehlerquellen durch falsche Bestückung ausgeschlossen.

Es prüft das erfindungsgemäße Verfahren, ob die Heizerendstufe eine Versorgungsspannung länger als eine vorgegebene Zeitschwelle ununterbrochen auf das Heizelement der Lambdasonde schaltet. Dadurch wird sichergestellt, dass das Heizelement nicht bereits ausgeschaltet wird, wenn das Schalten der Versorgungsspannung auf das Heizelement der Lambdasonde nur für einen kurzen Zeitraum besteht, der für das Heizelement ungefährlich ist.

Besonders bevorzugt wird eine Information ausgegeben, falls die vorgegebene Zeitschwelle überschritten wurde. Dadurch kann diese Information zu einem späten Zeitpunkt verwendet werden zum Beispiel für ein Protokoll. Ganz besonders bevorzugt wird die Information für einen Eintrag in einem Fehlerspeicher eines Steuergerätes verwendet. Dadurch kann ein Softwarefehler schon frühzeitig während der Entwicklung erkannt werden.

Erfindungsgemäß wird das Schalten der Versorgungsspannung auf das Heizelement der Lambdasonde durch eine aktive Deaktivierung beendet, falls die vorgegebene Zeitschwelle überschritten wird. Dies hat zur Folge, dass das Heizelement nicht beschädigt wird. Ganz besonders bevorzugt wird eine Reaktivierung des Schaltens der Versorgungsspannung auf das Heizelement der Lambdasonde durch die Hardware der Endstufe verhindert, falls bereits eine aktive Deaktivierung stattgefunden hat. Dies hat den Vorteil, dass das Heizelement regeneriert werden kann, bevor er wieder in Betrieb genommen wird.

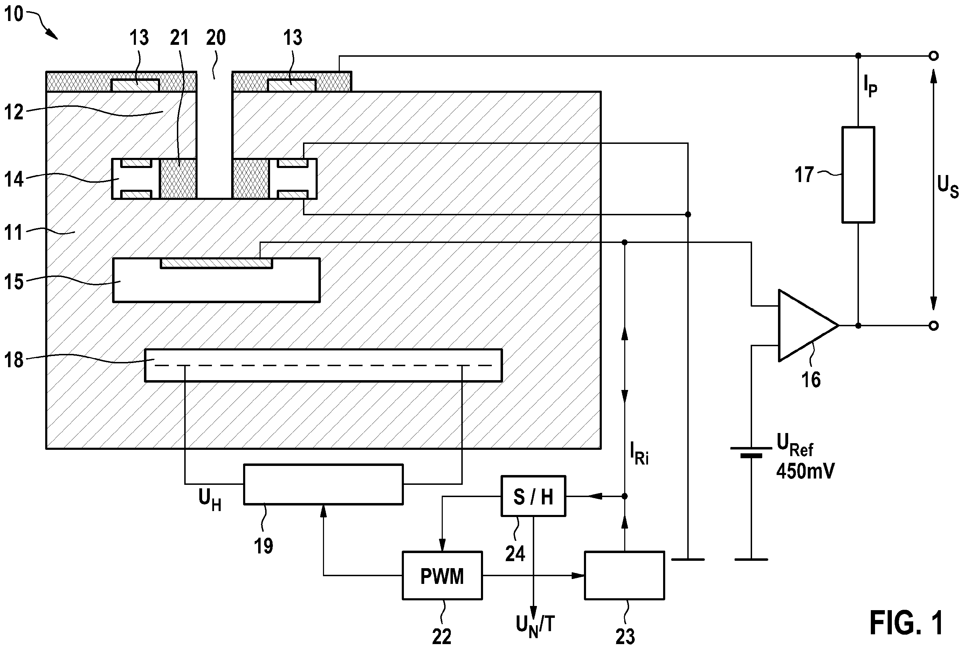

### Kurze Beschreibung der Zeichnung

Ausführungsbeispiele der Erfindung sind in der Zeichnung dargestellt und in der nachfolgenden Beschreibung näher erläutert.

Die Figur zeigt eine Lambdasonde mit einer Heizerendstufe, die mittels eines Verfahrens gemäß einem Ausführungsbeispiel der Erfindung gesteuert werden kann.

### Ausführungsformen der Erfindung

In der Figur ist eine aus dem Stand der Technik bekannte Lambdasonde 10 dargestellt. Die Lambdasonde 10 ist zur Messung des Restsauerstoffgehalts in einem Abgas vorgesehen, um das Luft-Kraftstoff-Gemisch für die Verbrennung im Verbrennungsmotor auf den Wert Lambda = 1, das heißt für ein stöchiometrisches Verhältnis von Luft und Kraftstoff, einregeln zu können. Das für die Lambdasonde 10 verwendete Keramikmaterial hat bei höheren Temperaturen eine elektrische Leitfähigkeit, so dass sich an den Anschlüssen der Sonde eine für den Sauerstoffgehalt charakteristische galvanische Spannung einstellt. Die für einen weiten Magerbereich einsetzbare Lambdasonde 10 besteht im Wesentlichen aus einer Kombination von einer als galvanische Zelle wirkenden Konzentrationszelle bzw. Nernstzelle 11 und einer Grenzstrom- bzw. Sauerstoffpumpzelle 12. Die Nernstzelle 11 steht mit einem Messgas in einem Hohlraum 14, der beispielsweise ringförmig ausgebildet ist und über einen Diffusionskanal 20 und eine Diffusionsbarriere 21 mit dem Abgas in Verbindung steht, und mit einem Referenzgas in einem Referenzluftkanal 15 in Kontakt. Das Messgas im Hohlraum 14 wird neben dem Abgas auch durch einen Pumpstrom beeinflusst, der in der Sauerstoffpumpzelle 12 induziert wird und den Sauerstoff in oder aus dem Hohlraum 14 pumpt. Hierfür wird an die Pumpzelle 12 von außen über die Außenpumpelektrode 13 eine Spannung angelegt. Der sich einstellende sogenannte Pumpstrom hängt vom Unterschied der Sauerstoffkonzentration auf beiden Seiten der Lambdasonde 10 und der eingestellten Spannung ab. Mit dem Pumpstrom werden Sauerstoffmoleküle transportiert. Der Pumpstrom wird durch einen Komparator bzw. eine Regelschaltung 16 so eingestellt, dass der Sauerstoffstrom durch den elektrischen Strom der Pumpzelle 12 den Sauerstoffstrom durch den Diffusionskanal 20 genau ausgleicht, so dass im Messgasraum 14 der Zustand Lambda = 1 herrscht. Der jeweilige Pumpstrom I_{P} bildet das Ausgangssignal der Lambdasonde 10 und ist als Pump- oder Sondenspannung U_{S} über einem Widerstand 17 abgreifbar.

Die Lambdasonde 10 umfasst weiterhin ein Heizelement 18 zur Beheizung der Sonde. Das Heizelement 18 wird über eine Heizerendstufe 19 angesteuert und mit der Heizspannung U_{H} beaufschlagt. Die Ansteuerung der Heizerendstufe 19 erfolgt erfindungsgemäß in geregelter Weise über eine Pulsweitenmodulation 22.

Die Bestimmung einer Temperatur der Lambdasonde 10 wird durch eine Messung des Innenwiderstandes Rᵢ der Lambdasonde 10 vorgenommen. Hierfür werden diskrete bipolare Messimpulse I_{Ri} aus Puls und Gegenpuls der Nernstzelle 11 durch ein Puls/Gegenpuls-Erzeugung 23 bzw. einen Impulsgenerator aufgeprägt und die Spannungsänderung im System, insbesondere die geänderte Nernstspannung U_{N}, als Reaktion hierauf erfasst. Da der Innenwiderstand Rᵢ sehr stark temperaturabhängig ist, kann aus der gemessenen Spannungsänderung auf die Temperatur der Abgassonde 10 geschlossen werden. Vorzugsweise erfolgt die Erfassung der durch die angelegten Messimpulse induzierten Spannungsänderungen durch ein Abgreifen der Änderung der Nernstspannung an einer Sample/Hold-Schaltung (S/H) 24. Der über eine Innenwiderstandsmessung erfasste Wert für die Temperatur der Abgassonde geht vorzugsweise als Eingangssignal in die Steuerung des Heizelements 18 über die Pulsweitenmodulation 22 ein.

Im vorliegenden Ausführungsbeispiel der Erfindung erfolgt eine Integration einer Einschaltüberwachung und einer Einschaltdauerbegrenzung in eine Hardware der Heizerendstufe 19 der Lambdasonde 10. Eine Einschaltdauer des Heizelements 18 wird von der Hardware der Heizerendstufe 19 am Ende einer Ansteuerkette überwacht. Fehler, die weiter vorne in der Ansteuerkette auftreten, wie Fehler der Software, werden erkannt und es können Gegenmaßnahmen ergriffen werden, um eine Beschädigung der Lambdasonde 10 zu verhindern.

Es ist vorgesehen, eine Dauer eines bestimmten kritischen Betriebszustands, nämlich das Schalten der Versorgungsspannung auf das Heizelement der Lambdasonde, direkt in der Heizerendstufe 19 zu überwachen. Hierzu wird die Überwachungsfunktionalität nicht durch eine externe Beschaltung der Heizerendstufe 19 realisiert, sondern in den Baustein der Heizerendstufe 19 integriert. Die Überwachungsfunktionalität prüft, ob der kritische Betriebszustand ununterbochen länger als eine vorgegebene Zeitschwelle besteht. Ist dies der Fall, wird eine entsprechende Information ausgegeben, die für einen Eintrag im Fehlerspeicher des Steuergeräts verwendet wird.

Zusätzlich ist vorgesehen, den kritischen Betriebszustand durch die Hardware der Heizerendstufe 19 aktiv zu beenden, falls die vorgegebene Zeitschwelle für diesen kritischen Betriebszustand überschritten wird. Üblicherweise ist die Zeitschwelle, für die das Heizelement 18 in einer fehlerfreien Lambdasonde 10 ununterbrochen eingeschaltet wird, deutlich kürzer als eine Dauer, bei der die Lambdasonde beschädigt wird. Eine Überwachungsdauer der Einschaltüberwachung, dauert um einen vorgegebenen Zeitabstand länger als eine maximale Betriebsdauer der Lambdasonde 10 in einem fehlerfreien Betrieb. Durch rechtzeitige aktive Deaktivierung des kritischen Betriebszustands wird eine Beschädigung der angeschlossenen Lambdasonde 10 sicher verhindert. Darüber hinaus wird eine Reaktivierung des kritischen Betriebszustandes durch die Hardware der Heizerendstufe 19 verhindert, wenn bereits die erfindungsgemäße Deaktivierung stattgefunden hat.

## Patentansprüche

1. Verfahren zur Steuerung einer Heizerendstufe eines Heizelements einer Lambdasonde eines Kraftfahrzeugs, wobei das Heizelement (18) über die Heizerendstufe (19) angesteuert und mit einer Heizspannung (U_{H}) beaufschlagt wird und wobei die Ansteuerung der Heizerendstufe (19) in geregelter Weise über eine Pulsweitenmodulation (22) erfolgt, wobei direkt innerhalb einer Hardware der Heizerendstufe am Ende der Ansteuerkette überwacht wird, ob die Heizerendstufe eine Versorgungsspannung länger als eine vorgegebene Zeitschwelle ununterbrochen auf das Heizelement der Lambdasonde schaltet, und durch die Hardware der Heizerendstufe am Ende der Ansteuerkette das Schalten der Versorgungsspannung auf das Heizelement der Lambdasonde durch eine aktive Deaktivierung beendet wird, falls die vorgegebene Zeitschwelle überschritten wird.

2. Verfahren nach Anspruch 1, **dadurch gekennzeichnet, dass** eine Information ausgegeben wird, falls die vorgegebene Zeitschwelle überschritten wurde.

3. Verfahren nach Anspruch 2, **dadurch gekennzeichnet, dass** die Information für einen Eintrag in einem Fehlerspeicher eines Steuergerätes verwendet wird.

4. Verfahren nach Anspruch 1, **dadurch gekennzeichnet, dass** das Schalten der Versorgungsspannung auf das Heizelement der Lambdasonde durch die Hardware der Heizerendstufe verhindert wird, falls bereits eine aktive Deaktivierung stattgefunden hat.

## Claims

1. Method for controlling a heater output stage of a heating element of a lambda probe of a motor vehicle, wherein the heating element (18) is actuated by means of the heater output stage (19) and has a heating voltage (U_{H}) applied to it, and wherein the actuation of the heater output stage (19) is performed in a regulated manner by means of pulse-width modulation (22), wherein, directly within an item of hardware of the heater output stage at the end of the actuation chain, monitoring is performed in respect of whether the heater output stage connects a supply voltage to the heating element of the lambda probe in an uninterrupted manner for longer than a prespecified time threshold, and connection of the supply voltage to the heating element of the lambda probe is terminated by the item of hardware of the heater output stage at the end of the actuating chain by active deactivation if the prespecified time threshold is exceeded.

2. Method according to Claim 1, **characterized in that** an item of information is output if the prespecified time threshold has been exceeded.

3. Method according to Claim 2, **characterized in that** the item of information is used for entry into a fault memory of a controller.

4. Method according to Claim 1, **characterized in that** the connection of the supply voltage to the heating element of the lambda probe is prevented by the item of hardware of the heater output stage if active deactivation has already taken place.

## Revendications

1. Procédé de commande d'un étage de sortie de chauffage d'un élément de chauffage d'une sonde lambda d'un véhicule automobile, dans lequel on commande l'élément de chauffage (18) au moyen de l'étage de sortie de chauffage (19) et on applique une tension de chauffage (U_{H}) et dans lequel on opère la commande de l'étage de sortie de chauffage (19) de façon régulée par une modulation de largeur d'impulsions (22), dans lequel on surveille directement à l'intérieur d'un matériel de l'étage de sortie de chauffage à l'extrémité de la chaîne de commande, si l'étage de sortie de chauffage connecte une tension d'alimentation plus longtemps qu'un seuil de temps prédéterminé sans interruption à l'élément de chauffage de la sonde lambda, et on met fin à la connexion de la tension d'alimentation à l'élément de chauffage de la sonde lambda au moyen du matériel de l'étage de sortie de chauffage à la fin de la chaîne de commande, par une désactivation active dans le cas où le seuil de temps prédéterminé est dépassé.

2. Procédé selon la revendication 1, **caractérisé en ce que** l'on émet une information, dans le cas où le seuil de temps prédéterminé a été dépassé.

3. Procédé selon la revendication 2, **caractérisé en ce que** l'on utilise l'information pour une entrée dans une mémoire de défauts d'un appareil de commande.

4. Procédé selon la revendication 1, **caractérisé en ce que** l'on empêche la connexion de la tension d'alimentation à l'élément de chauffage de la sonde lambda par le matériel de l'étage de sortie de chauffage, dans le cas où la désactivation active a déjà eu lieu.
